# FASCICULE DE BREVET EUROPEEN

(11) **EP 4 507 804 B1**
(45) Date de publication et mention de la délivrance du brevet: **19.08.2026**
(21) Numéro de dépôt: 23722432.4
(22) Date de dépôt: 13.04.2023
(51) Int. Cl.: B01D 45/04, B01D 45/08, F16D 65/00

(54) **DISPOSITIF DE CAPTATION DE PARTICULES LIQUIDES DANS UN FLUX GAZEUX**
VORRICHTUNG ZUM AUFFANGEN VON FLÜSSIGEN PARTIKELN IN EINEM GASSTROM
DEVICE FOR CAPTURING LIQUID PARTICLES IN A GAS STREAM

(30) Priorité: 15.04.2022 FR 2203540
(43) Date de publication de la demande: 19.02.2025
(73) Titulaire: Tallano Technologies, 75015 Paris (FR); AKWEL, 01410 Champfromier (FR)
(72) Inventeur: BENKRAIEM, Lotfi, 01130 NANTUA (FR); LAGIER, Serge, 74150 MOYE (FR); GUERRY, Pascal, 68580 SEPPOIS LE HAUT (FR)
(74) Mandataire: Plasseraud IP
(86) Numéro de dépôt international: PCT/FR2023/050529
(87) Numéro de publication internationale: WO 2023/198994

(56) Documents cités:
- EP-A2- 1 447 532
- KR-A- 20190 080 084
- US-A1- 2004 261 776
- US-A1- 2010 313 861

## Description

La présente invention concerne un dispositif de captation de particules liquides contenues dans un flux gazeux. Elle s'applique plus particulièrement mais non spécifiquement à un système de récupération de particules de poussières de freinage, en particulier émises lors d'une action de freinage d'un véhicule automobile dont l'air est aspiré.

Le domaine d'application de l'invention concerne plus particulièrement mais non exclusivement la récupération des poussières de freinage générées lors d'une action de freinage d'un véhicule, qu'il soit routier (par exemple : automobile, poids lourd, motocyclette) ou ferroviaire (train, tramway métro).

De manière générale, le freinage d'un véhicule ferroviaire ou routier, et en particulier d'un véhicule automobile, est réalisé par un système de freinage à friction, comme c'est le cas par exemple des « freins à disque ». Un frein à disque comprend un disque tournant autour d'un axe fixé sur un moyeu d'une roue du véhicule et des plaquettes de frein pourvues de garnitures réalisées en matériau de friction et montées de part et d'autre du disque par l'intermédiaire d'un étrier de frein.

Lors d'une action de freinage, les plaquettes de frein mobiles par rapport à l'étrier viennent en appui sur les disques liés en rotation aux roues du véhicules, afin d'appliquer dessus un couple de freinage et permettre le freinage par conversion de l'énergie cinétique en chaleur.

Or, à chaque action de freinage, le frottement des plaquettes de frein produit, en plus du dégagement de chaleur, une usure des matériaux de friction des garnitures, ainsi qu'une usure des disques ou des tambours métalliques. Cette usure par abrasion produit une émission de particules importante. Les freins d'un véhicule automobile n'étant généralement pas complètement fermés, ces particules de poussière de freinage viennent alors directement se disperser dans le milieu ambiant.

Outre le fait d'être salissantes pour l'environnement immédiat des roues et notamment des jantes, ces particules sont surtout nocives pour la santé. En effet, ces particules peuvent être des nanoparticules ou des microparticules, les particules les plus fines étant reconnues comme étant particulièrement nocives pour la santé des individus en général, avec notamment un risque accru de développer des maladies respiratoires, allergiques et cardio-vasculaires.

Afin de réduire la pollution aux particules de poussière de freinage, il est connu de l'état de la technique de disposer à proximité du système de freinage un système d'aspiration et de filtration des particules.

Un tel système de filtration comprend notamment un dispositif de filtration pourvu d'un boîtier délimitant un corps de collecte et logeant par exemple une cartouche filtrante, raccordable à une entrée de flux d'air sale à proximité des plaquettes et à une sortie de flux d'air purifié raccordée par exemple à une turbine d'aspiration de l'air. Cette circulation de l'air s'effectue alors entre l'entrée et la sortie au travers de la cartouche filtrante.

Le flux d'air sale aspiré, admis dans ce type de système de filtration, peut selon les conditions climatiques être plus ou moins chargé de gouttelettes d'eau, qui se trouvent alors entraînées à l'intérieur du dispositif de filtration.

Or, l'imbibition de la cartouche filtrante par du liquide dégrade sensiblement l'efficacité de filtration et de captation de la cartouche et peut à terme conduire au déchirement de la cartouche sous l'effet conjugué du poids du liquide et de la pression de l'air aspiré la traversant.

Afin de décharger le flux d'air aspiré de ses particules liquides ou gouttelettes, on connaît déjà de l'art antérieur, notamment de la demande de brevet de la demanderesse N°FR2101230 un dispositif qui comprend une structure cyclonique en amont de la cartouche filtrante de sorte que de grosses particules de poussière mais aussi des gouttelettes d'eau du flux d'air sale sont collectées par effet de centrifugation lors du passage du flux d'air dans la structure cyclonique avant la traversée de la cartouche filtrante.

Toutefois, bien que se révélant très efficace pour la captation d'eau, il n'en reste pas moins qu'une telle structure cyclonique est particulièrement encombrante et complexifie grandement le dispositif de filtration.

US 2010/313861 A1, KR 2019 0080084 A, EP 1 447 532 A2 et US 2004/261776 A1 montrent d'autres documents pertinents.

### Description de l'invention

La présente invention vise à remédier à ces inconvénients, en fournissant une autre solution pour l'élimination des gouttelettes, cette solution évitant l'incorporation d'éléments supplémentaires encombrants tout en conduisant à un résultat efficace.

A cet effet, l'invention a pour objet un dispositif de captation de particules liquides dans un flux gazeux, comprenant un corps délimitant une cavité définissant une trajectoire principalement verticale d'écoulement du flux d'air gazeux entre des orifices d'entrée et de sortie dans une configuration de fonctionnement du dispositif, caractérisé en ce que la cavité comprend une cloison intérieure de séparation verticale délimitant une chambre de décantation des particules liquides le long de ladite trajectoire principale et une chambre de collecte de liquide comprenant une zone en dépression, la cloison comprenant un trou ménagé en bas de la cloison adapté pour aspirer du liquide de la chambre de décantation vers la chambre de collecte par effet de dépression de ladite zone, la cloison comprenant une ouverture de mise en dépression de ladite zone, ménagée en haut de la cloison.

L'invention permet ainsi de collecter l'humidité du flux gazeux avec une solution simple et d'encombrement réduit. Grâce à la disposition définie dans l'invention, le trou dans la cloison de séparation de la chambre de collecte et de la chambre de décantation permet de remplir la chambre de captation par effet de dépression d'une zone de la chambre de collecte.

Le dispositif de l'invention peut en outre comporter l'une ou plusieurs des caractéristiques suivantes.

Dans un mode de réalisation préféré de l'invention, la chambre de décantation comprend une dépression qui se propage à la chambre de collecte par ladite ouverture pour provoquer la mise en dépression de ladite zone.

Dans un mode de réalisation préféré de l'invention, la chambre de décantation comprend un relief configuré pour générer une perte de charges selon la trajectoire principale d'écoulement du flux gazeux produisant la dépression dans la chambre de décantation.

De façon connue en soi, des pertes de charge dans l'écoulement d'un fluide ou flux gazeux sont des chutes de pression dues à la résistance que peuvent rencontrer les fluides ou flux gazeux en écoulement.

Dans un mode de réalisation préféré de l'invention, l'ouverture est localisée le long de la trajectoire principale d'écoulement du flux d'air gazeux et est configurée pour introduire un rétrécissement de section d'écoulement du flux d'air gazeux le long de la trajectoire principale ou une modification de direction de la trajectoire principale afin de provoquer une mise en dépression de ladite zone.

Dans un mode de réalisation préféré de l'invention, l'ouverture est ménagée en haut, à distance du trou d'aspiration selon la direction verticale.

Dans un mode de réalisation préféré de l'invention, l'orifice de sortie débouchant à l'intérieur de la chambre de collecte, la trajectoire principale traverse la cloison par l'ouverture ménagée en haut de la cloison avant d'atteindre l'orifice de sortie par la chambre de collecte.

Dans un mode de réalisation préféré de l'invention, l'orifice d'entrée débouche verticalement de façon à permettre la vidange du liquide collecté qui peut s'écouler par effet de gravité par l'orifice d'entrée.

Dans un mode de réalisation préféré de l'invention, la circulation du flux au travers du dispositif étant créée par une aspiration intermittente du flux par l'orifice de sortie du dispositif, le liquide peut s'écouler lors d'un arrêt de l'aspiration de flux par l'orifice d'entrée.

Dans un mode de réalisation préféré de l'invention, la trajectoire principale comprend au moins un changement de direction.

Dans un mode de réalisation préféré de l'invention, la trajectoire comprend une portion en forme générale de « S » formé par deux coudes successifs d'orientations différentes.

Dans un mode de réalisation préféré de l'invention, le trou d'aspiration a une forme générale oblongue de direction longitudinale sensiblement horizontale.

Dans un mode de réalisation préféré de l'invention, la cloison comprend une paroi de forme générale annulaire autour d'un axe principal d'orientation sensiblement verticale ou comprend une paroi de forme générale plane.

Dans un mode de réalisation préféré de l'invention, le dispositif comprend des embouts de branchement pour son raccordement à un circuit de tuyaux de circulation du flux gazeux.

L'invention a encore pour objet un système de récupération de particules de freinage comprenant un dispositif aval de filtration et de collecte de particules de freinage comprenant un orifice d'admission d'un flux d'air sale et un orifice de refoulement d'un flux d'air purifié, l'orifice de refoulement étant destiné à être raccordé à un organe d'aspiration du flux d'air afin de provoquer, en fonctionnement, par effet d'aspiration une circulation du flux d'air à l'intérieur du dispositif entre les deux orifices, caractérisé en ce que l'orifice d'admission est raccordé à l'orifice de sortie d'un dispositif amont de captation de particules liquides selon l'une quelconque des revendications précédentes de telle sorte que le flux d'air sale s'écoule au travers dudit dispositif de captation avant son admission par l'orifice d'admission du dispositif aval de filtration et de collecte.

D'autres caractéristiques et avantages de l'invention apparaîtront à la lumière de la description qui suit, faite en référence aux dessins annexés dans lesquels :
[Fig. 1] La figure 1 représente illustre une vue schématique d'un véhicule automobile incorporant un système de dépollution de particules de freinage selon l'invention ;
[Fig. 2] La figure 2 illustre une vue schématique de l'environnement d'une roue du véhicule automobile de la figure 1 comprenant le système de dépollution selon un premier mode de réalisation de l'invention ;
[Fig. 3] La figure 3 représente une vue en perspective d'un dispositif de captation du système de dépollution de la figure 2 selon le premier mode de réalisation ;
[Fig. 4] La figure 4 représente une vue en perspective et en coupe du dispositif de la figure 3 ;
[Fig. 5] La figure 5 représente une vue schématique de l'environnement d'une roue du véhicule automobile de la figure 1 comprenant le système de dépollution selon un deuxième mode de réalisation de l'invention ;
[Fig. 6] La figure 6 représente une vue en perspective et en coupe du dispositif de la figure 5.
[Fig. 7] La figure 7 représente une vue en perspective et en coupe du dispositif de la figure 4 pendant une phase de freinage.

### Description détaillée de l'invention

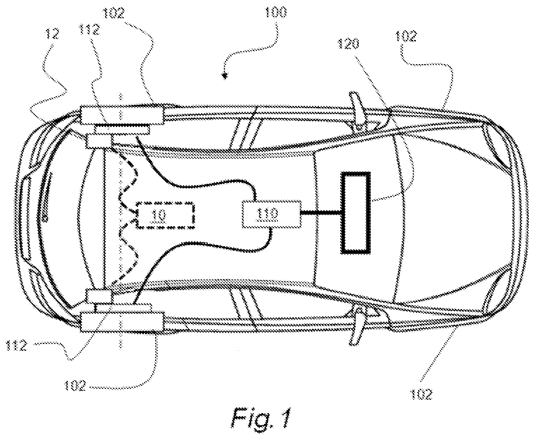

On a représenté sur la figure 1 un véhicule automobile comprenant un système dépolluant par aspiration et collecte de particules de poussières de frein selon l'invention. Ce système est désigné par la référence générale 10 et le véhicule automobile est désigné par la référence générale 100. Dans le mode de réalisation préféré de l'invention, le véhicule 100 est un véhicule automobile, dans le cas d'espèce une voiture légère. Bien entendu, l'invention peut s'appliquer à d'autres véhicules, tels que des véhicules poids-lourds, ou des véhicules ferroviaires ou autres.

De façon générale mais non limitative, ce véhicule 100 comprend quatre roues 102 et un système de freinage 110 qui a pour fonction de ralentir le véhicule et de le maintenir à l'arrêt notamment pendant des périodes relativement courtes. Le système de freinage 110 est configuré pour appliquer un couple de freinage à au moins deux des roues 102 du véhicule 100 et de préférence aux quatre roues 102 du véhicule. De façon classique, les roues 102 sont aptes à être entraînées en rotation par un groupe motopropulseur, par exemple un moteur thermique ou un moteur électrique (non représenté) ou tout autre type de propulsion.

A cet effet, ce système de freinage 110 comprend de préférence quatre agencements de frein 112 associés à chacune des roues 102 et une unité de gestion de ces agencements de frein (seulement deux agencements de frein 112 sont représentés sur la figure 1). Ainsi, un usager du véhicule 100 peut piloter le système de freinage 110 par l'intermédiaire d'une unité de pilotage 120 du véhicule 100 qui pilote les agencements de frein 112 du système de freinage 110.

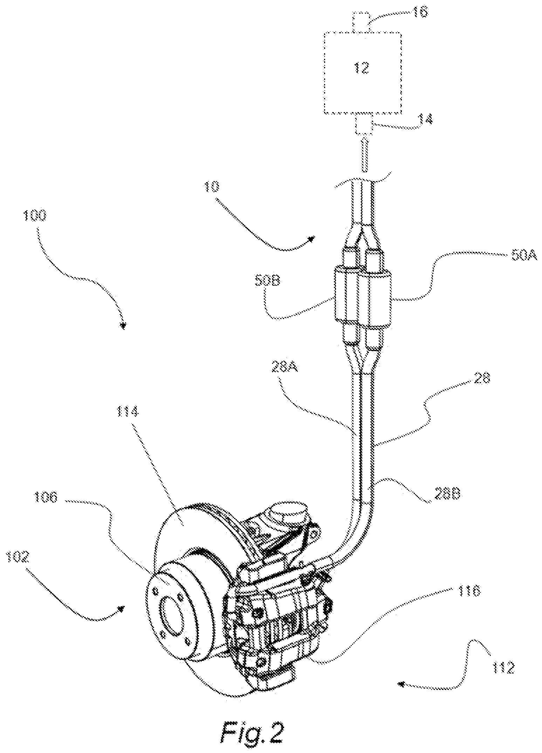

Un tel agencement de frein 112 est illustré en exemple sur la figure 2. De façon préférentielle, cet agencement 112 est de type frein à disque. La figure 2 illustre l'agencement de frein 112 monté sur une des roues 102 de véhicule 100.

Chaque agencement de frein 112 comprend de façon non limitative un disque rotor 114 tournant autour d'un axe principal et solidaire en rotation de la roue 102 auquel il est associé. Cet axe principal est généralement destiné à être fixé sur un moyeu 106 d'une roue 102 du véhicule 100.

En outre, l'agencement de frein 112 comprend un support 116 d'étrier disposé à cheval sur un bord extérieur du disque 114 et solidaire en rotation d'une partie fixe d'un châssis (non représenté) du véhicule 100. L'agencement de frein 112 comprend encore deux plaquettes de frein (non directement visibles sur la figure 2) pourvues de garnitures réalisées en matériau de friction et montées de part et d'autre du disque 114 par l'intermédiaire du support d'étrier 116.

Ces plaquettes de frein sont montées mobiles, par exemple sous l'effet d'un vérin hydraulique (non représenté), et sont destinées à venir serrer le disque rotor 114 pour le freiner jusqu'à l'arrêt de ce dernier en transformant l'énergie cinétique en énergie thermique. Les garnitures de plaquettes sont généralement réalisées en matériau de friction et relâchent des particules résultant de l'abrasion par frottement contre le disque 114. Pendant le freinage, le frottement entre la garniture de frein et le disque 114 génère de la poussière qui contient éventuellement des particules fines dangereuses pour la santé.

Afin de récupérer les particules de poussière de freinage, le système de récupération et de collecte 10 est destiné à aspirer et collecter des particules de poussières produites lors d'une action de freinage du véhicule automobile 100, en particulier d'un freinage à friction des agencements de frein 112 du véhicule 100 tels que décrits ci-dessus.

Dans l'exemple illustré, le système 10 comprend au moins un dispositif 12 de dépollution selon l'invention (représenté schématiquement par un cadre à trait discontinu sur la figure 2) et comprend autant de dispositif de dépollution 12 que d'agencements de frein 112. Par exemple, le système 10 comprend quatre dispositifs de dépollution 12 pour équiper les quatre agencements de frein 112 du véhicule 100.

Par convention, dans la présente demande, les termes « amont » et « aval » sont définis par rapport au sens de circulation du flux gazeux dans l'exemple illustré, à savoir dans le sens allant des plaquettes de frein vers le dispositif de filtration 12.

Le dispositif 12 a pour fonction de récupérer et de collecter des poussières et des particules de freinage, par exemple provenant d'un des agencements de freinage du véhicule automobile. De façon classique, le dispositif 12 se présente généralement sous la forme d'un boîtier muni d'un orifice d'admission 14 du flux d'air sale et d'un orifice de refoulement 16 du flux d'air purifié et délimitant un corps de collecte des particules de poussière.

A cet effet, le dispositif 12 comprend un corps de boîtier logeant au moins un organe de séparation (non représenté sur la figure 2), pour séparer des particules du flux d'air sale, au travers duquel le flux d'air circule entre les deux orifices 14 et 16. Dans l'exemple décrit, l'organe de séparation comprend par exemple une cartouche filtrante. Par ailleurs, de façon préférentielle, un tel boîtier est dimensionné pour être logé dans un espace environnant une roue 102 de véhicule automobile 100, par exemple autour d'une jambe d'un amortisseur de suspension.

En outre, comme cela est illustré schématiquement sur la figure 2, le boîtier du dispositif 12 peut être raccordé, via un conduit d'aspiration 28, par exemple formé par des tuyaux flexibles 28A, 28B, à un des agencements de frein à disque 112. De préférence, le conduit d'aspiration 28A, 28B comprend une de ses extrémités située à proximité immédiate de la zone où cette poussière de frein est susceptible d'être générée. L'autre de ses extrémités débouche de préférence à l'intérieur du corps de collecte du dispositif 12.

Afin de provoquer une circulation d'air efficace à l'intérieur du dispositif 12, un organe d'aspiration du flux d'air purifié tel que par exemple une pompe centrifuge est disposé en aval du dispositif 12. Dans l'exemple décrit, l'orifice de refoulement 16 du dispositif de filtration 12 est destiné à être raccordé à un organe d'aspiration du flux d'air afin de provoquer par effet d'aspiration une circulation du flux d'air au travers de la cartouche filtrante entre l'orifice d'admission 14 et l'orifice de refoulement 16.

Conformément à l'invention, le système 10 comprend encore un dispositif de captation 50 de particules liquides dans le flux d'air sale qui peut être chargé d'humidité. En effet, le flux d'air sale est capté au niveau de la roue 102 du véhicule automobile 100 qui est soumise à des éclaboussures fréquentes, en particulier par temps humide. Ces particules liquides peuvent être de l'eau mais éventuellement également de l'huile.

Dans ce premier mode de réalisation de l'invention, comme cela est représenté sur la figure 2, le dispositif de captation 50 de particules liquides est monté sur une branche du conduit d'aspiration 28, en amont du dispositif de filtration 12. Par exemple, le système de dépollution 10 comprend deux dispositifs de captation 50A et 50B montés respectivement sur chacun des tuyaux flexibles 28A et 28B. Dans la suite de la description, on ne décrira qu'un seul des deux dispositifs de captation sous la référence générale 50.

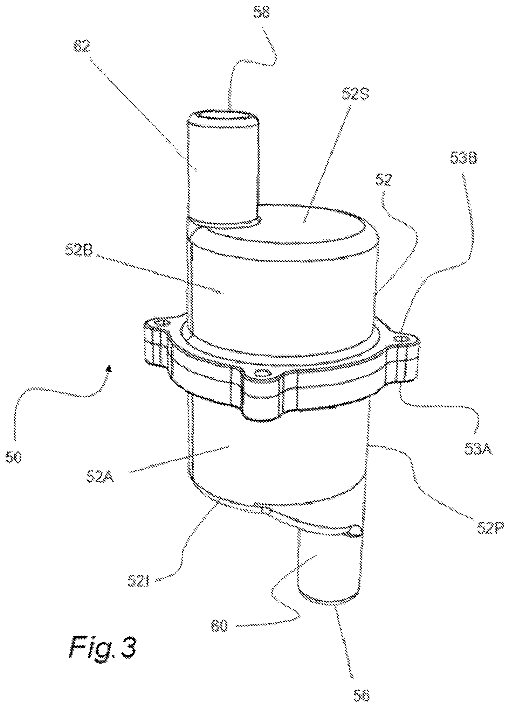

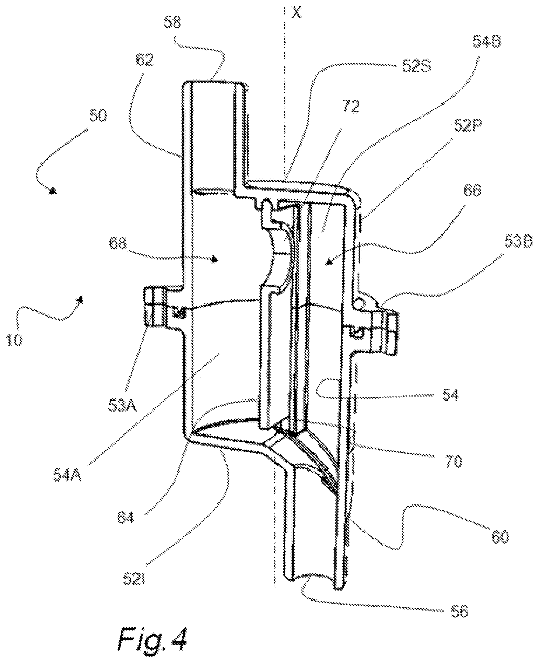

Un dispositif de captation 50 du premier mode de réalisation est illustré en détail sur les figures 3 et 4. Comme cela est représenté sur ces figures, le dispositif 50 comprend un corps 52 délimitant une cavité 54 et des orifices d'entrée 56 et de sortie 58 du flux d'air. Comme cela est représenté sur la figure 2, le dispositif 50 est raccordé au circuit de circulation du système d'aspiration 10 en amont du dispositif de filtration des particules 12.

Dans l'exemple illustré, le corps 52 du dispositif de captation 50 se présente extérieurement globalement sous forme d'un boîtier. Dans le cas présent, le boîtier 52 a une paroi périphérique 52P de forme générale cylindrique autour d'un axe principal X et est pourvu de faces d'extrémités inférieure 52I et supérieure 52S.

Par convention dans la présente demande, les termes « intérieur » et « extérieur », « inférieur » et « supérieur », et « interne » et « externe » sont définis radialement par rapport à l'axe principal X du dispositif de captation 50.

Ce boîtier 52 se présente par exemple en deux parties 52A et 52B pouvant être assemblées entre elles par divers procédés d'assemblage libérables ou non libérables qui ne seront pas plus détaillés. Par exemple, chaque partie 52A ou 52B comprend une bride de fixation périphérique respectivement inférieure 53A et supérieure 53B permettant un assemblage des deux parties 52A, 52B par exemple au moyen de vis de fixation classiques ou tout autre moyen d'assemblage.

En outre, ce boîtier 52 est pourvu d'un embout d'entrée 60 et d'un embout de sortie 62 délimitant respectivement l'orifice d'entrée 56 et l'orifice de sortie 58. Ces deux orifices d'entrée 56 et de sortie 58 débouchent à l'intérieur de la cavité 54.

Selon l'invention, dans une configuration de fonctionnement du dispositif 50, les orifices d'entrée 56 et de sortie 58 débouchent respectivement dans des parties inférieure 54A et supérieure 54B de la cavité 54 afin de définir une trajectoire principalement verticale d'écoulement du flux d'air gazeux entre les orifices d'entrée 56 et de sortie 58 dans une configuration de fonctionnement du dispositif 50. Dans l'exemple illustré, cette direction verticale coïncide sensiblement avec la direction de l'axe principal X du dispositif 50 dans la configuration de fonctionnement du dispositif 50.

Conformément à l'invention, la cavité 54 comprend une cloison intérieure 64 de séparation verticale délimitant une première chambre 66 de décantation des particules liquides dans le flux gazeux à l'intérieur de laquelle débouche l'orifice d'entrée 56, et une deuxième chambre 68 de récupération ou de collecte des particules liquides captées dans la première chambre 66.

La cloison 64 est formée de préférence par une paroi de forme générale plane délimitant selon la direction verticale les deux chambres 66 et 68. Dans une variante non illustrée sur les figures, la cloison 64 peut se présenter sous une forme annulaire autour d'un axe de révolution d'orientation également verticale, dans la configuration de fonctionnement du dispositif 50.

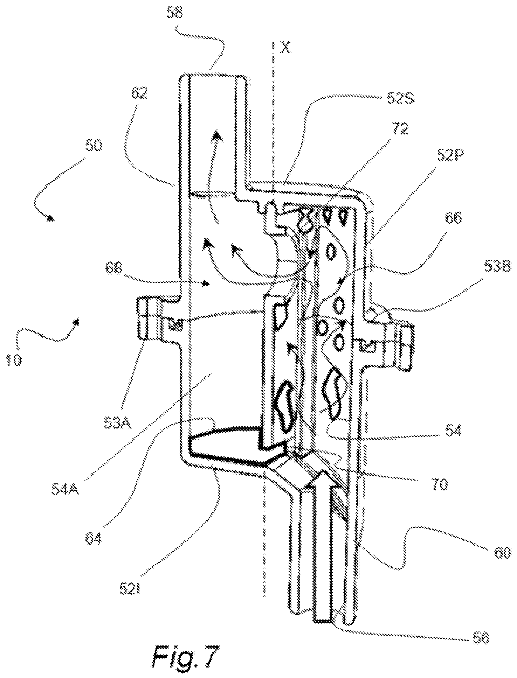

Plus précisément, la chambre de décantation 66 s'étend le long de ladite trajectoire principale d'écoulement du flux gazeux. Ceci est visible sur la figure 7 : les particules liquides sont représentées schématiquement dans la chambre de décantation 66.

En outre, de façon particulière, la chambre de collecte 68 des particules liquides comprend une zone en dépression. En particulier, la cloison intérieure 64 comprend un trou 70 ménagé en bas de la cloison 64 et agencé pour aspirer du liquide de la chambre de décantation 66 vers la chambre de collecte 68 par l'effet créé par la dépression dans ladite zone.

Par exemple, le trou d'aspiration 70 est ménagé de préférence au plus bas de la cloison 64. Par exemple, la cloison 64 présente une échancrure sur un bord inférieur délimitant le trou 70 qui se présente sous la forme d'une fente délimitée par la cloison 64 et le fond de la cavité 54. Sur la figure 7, on voit notamment que la chambre de récupération 68 est remplie de liquide dans une zone communiquant avec le trou 70. De façon plus générale et de préférence, le trou 70 se présente sous la forme d'une ouverture oblongue de direction longitudinale perpendiculaire à la direction verticale.

De préférence, la cloison 64 comprend encore une ouverture 72 de mise en dépression de la zone de la chambre de collecte 68, ménagée en haut de la cloison 64.

Par exemple, la chambre de décantation 66 comprend une dépression qui se propage à la chambre de collecte 68 par ladite ouverture 72 pour provoquer la mise en dépression de ladite zone 70. Par exemple, la chambre de décantation 66 peut comprendre un relief (non représenté) configuré pour générer une perte de charges singulières selon la trajectoire principale d'écoulement du flux gazeux ce qui génère une dépression dans la chambre de décantation 66.

Dans l'exemple illustré sur les figures, l'ouverture 72 est localisée le long de la trajectoire principale d'écoulement du flux d'air gazeux et est configurée pour introduire une modification de direction de la trajectoire principale ce qui a pour effet de générer des pertes de charges. Ces pertes de charges ont pour effet de provoquer une mise en dépression de ladite zone dans la chambre de collecte 68.

En variante, l'ouverture 72 peut introduire un rétrécissement de la section de passage du flux gazeux le long de la trajectoire principale ce qui a également pour effet de générer des pertes de charges et ainsi de provoquer une mise en dépression de ladite zone dans la chambre de collecte 68.

De préférence, l'orifice de sortie 62 débouche à l'intérieur de la chambre de collecte 68 dans la partie supérieure 54B de la cavité 54 et l'ouverture intermédiaire 72 d'écoulement du flux gazeux selon la trajectoire d'écoulement est ménagée en haut de la cloison 64. L'orifice de sortie 62 est ménagée dans l'exemple illustré sur la paroi supérieure d'extrémité 52S du corps 52. Toutefois, en variante, l'orifice de sortie 62 peut déboucher latéralement au travers de la paroi périphérique 52P du boîtier 52.

De préférence, l'orifice d'entrée 60 débouche verticalement de façon à permettre la vidange du liquide collecté qui peut s'écouler par effet de gravité par l'orifice d'entrée 60. Dans l'exemple illustré sur la figure, l'orifice d'entrée 60 est ménagé sur la paroi de fond 52I du corps 52 du dispositif 50 de sorte que l'orifice d'entrée 60 forme également un orifice de vidange du liquide qui peut alors s'écouler passivement, par effet de gravité, au travers de l'orifice d'entrée 60.

En particulier, dans le cas d'une utilisation du dispositif de captation de liquide 50 dans le système de récupération de particules de freinage 10, la circulation du flux gazeux au travers du dispositif 50 est créée par une aspiration intermittente du flux en sortie du dispositif de captation 50. En effet, en dehors des phases de freinage, la turbine d'aspiration du flux gazeux est arrêtée de sorte que la circulation du fluide est interrompue à l'intérieur du dispositif de captation 50.

La circulation intermittente du flux à l'intérieur du dispositif 50 permet la vidange régulière du liquide stocké par la chambre de collecte 68 par l'orifice d'entrée 60 qui forme également un orifice de vidange du liquide qui peut s'écouler passivement, par effet de gravité, au travers de l'orifice d'entrée 60 lors d'un arrêt de l'aspiration de flux, c'est-à-dire en dehors des phases de freinage.

La chambre de captation 66 communique avec l'orifice de sortie 58 du dispositif de captation 50. De préférence, l'orifice de sortie 58 débouche à l'intérieur de la chambre de collecte 66 et l'ouverture intermédiaire 72 est ménagée en haut de la cloison 64, à distance du trou d'aspiration 70 selon la direction verticale. L'ouverture 72 en partie haute de la cloison 64 permet le passage de l'air décanté pour son évacuation vers l'extérieur par l'orifice de sortie 58.

Dans le cas présent, la chambre de décantation 66 forme un volume d'impaction et de turbulence du flux gazeux la traversant ce qui induit par effet d'impaction contre des parois de cette chambre 66 une agglomération des particules liquides qui viennent décanter par effet de gravité au fond de la chambre de captation 66.

Par exemple, comme cela est illustré sur la figure 4, la trajectoire principale comprend au moins un changement de direction en formant par exemple au moins un coude. De préférence, la trajectoire principale comprend une portion aval sensiblement verticale et une portion amont coudée. La portion coudée a par exemple une forme générale de « S », en forme de deux coudes successifs d'orientations inversées l'un par rapport à l'autre.

Comme cela est représenté dans l'exemple illustré, la trajectoire d'écoulement traverse la cloison 64 par l'ouverture ménagée 72 en haut de la cloison 64 en formant un premier coude avant d'atteindre l'orifice de sortie 58 par la chambre de collecte 66 en formant un deuxième coude d'orientation inversée. En variante, l'orifice de sortie 58 peut déboucher latéralement par la paroi périphérique 52P du corps de boîtier 52 du dispositif de captation 50 de sorte que la trajectoire d'écoulement ne comporte qu'un seul coude.

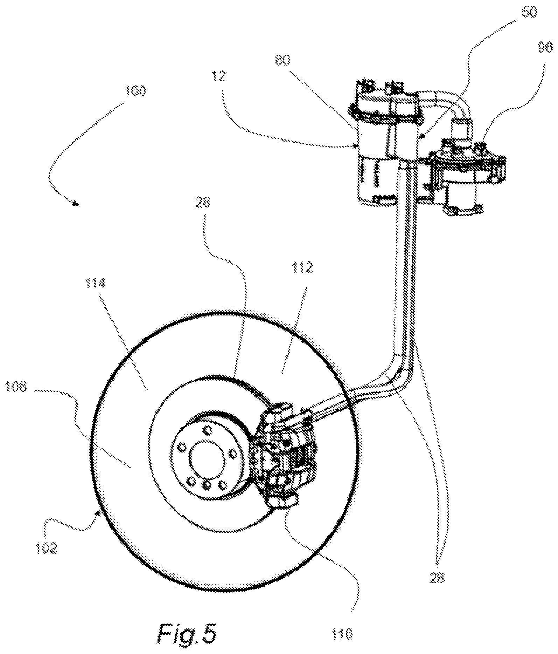

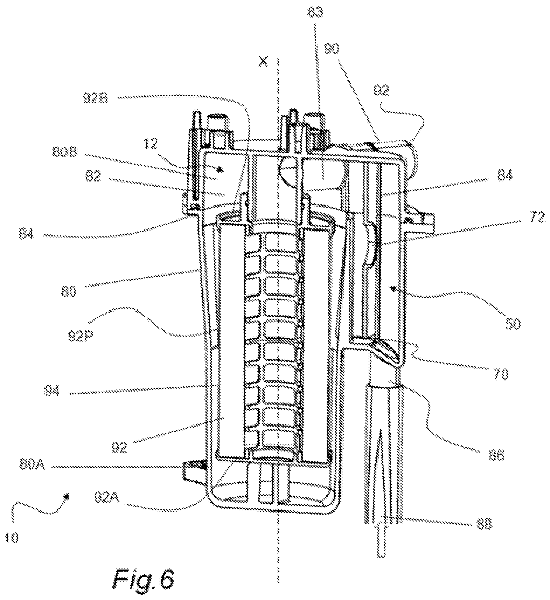

On a représenté sur les figures 5 et 6 un dispositif de captation 50 selon un deuxième mode de réalisation. Dans ce deuxième mode de réalisation, les éléments analogues à ceux du premier mode de réalisation portent des références identiques.

Dans ce deuxième mode de réalisation, comme cela est visible sur la figure 5, le dispositif aval 12 de collecte et de filtration et le dispositif amont 50 de captation sont formés d'une seule pièce dans un corps de boîtier commun 80 comprenant respectivement un compartiment principal aval 82 de collecte et de filtration et un compartiment secondaire amont 84 de captation de particules liquides et les deux dispositifs 50 et 12 communiquent l'un avec l'autre respectivement par leur orifice d'admission et leur orifice de sortie.

Sur la figure 6, le compartiment secondaire 84 forme un prolongement du compartiment principal 82 pour loger le dispositif de captation de particules liquides 50. Avantageusement, un tel arrangement facilite les opérations de fabrication et de production d'un tel produit, par exemple par moulage par injection dans un moule unique selon un plan de joint.

Comme cela est illustré sur la figure 6, le corps de boîtier 80 a une forme générale tubulaire, par exemple cylindrique autour d'un axe principal X. Ce boîtier 80 se présente par exemple en deux parties 80A et 80B pouvant être assemblées entre elles par divers procédés d'assemblage libérables ou non libérables qui ne seront pas plus détaillés.

En outre, ce corps de boîtier 80 comprend un orifice d'entrée 88 d'un flux d'air sale chargé en particules de poussières et en particules de liquide et prélevé dans l'environnement immédiat des plaquettes de frein 118 par l'intermédiaire par exemple d'un tuyau flexible 28. Le corps du boîtier 80 comprend encore un orifice d'évacuation 92 du flux d'air purifié et déchargé de microgouttelettes après son passage à l'intérieur des deux dispositifs 12 et 50. Comme cela est visible sur la figure 5, l'orifice d'évacuation 92 est branché en sortie par un tuyau coudé à une turbine d'aspiration 96.

Cet orifice d'entrée 88 débouche dans l'exemple illustré à l'intérieur du compartiment secondaire 84. A cet effet, le boîtier 80 comprend également un embout connecteur 86 destiné à être raccordé à l'orifice d'entrée 88 et à être raccordé à un ou deux tuyaux flexibles 28 débouchant à proximité de l'agencement de frein 116 représenté schématiquement sur la figure 5.

Le dispositif 12, logé dans le compartiment principal 82, comprend une cartouche filtrante 92 configurée pour filtrer l'air selon une direction radiale. A cet effet, la cartouche 92 comprend une paroi périphérique 92P filtrante allongée s'étendant longitudinalement selon l'axe X et de forme générale annulaire autour d'un espace intérieur creux central 94. Cet espace intérieur 94 délimite ainsi un conduit interne de passage d'évacuation de l'air après filtration dans la cartouche 92 au travers de la paroi filtrante 92P.

La paroi périphérique 92P de la cartouche filtrante 92 est formée par exemple d'un média filtrant annulaire et comprend deux flasques de support inférieur 92A et supérieur 92B, entre lesquels s'étend axialement et longitudinalement le média filtrant. La paroi périphérique 92P comprend dans l'exemple illustré encore une cloison intérieure annulaire ajourée reliant rigidement les deux flasques de support 92A, 92B et délimitant de façon périphérique le passage interne de l'air après filtration. Ce média filtrant est réalisée dans une matière filtrante, par exemple microporeuse, moulée ou plissée en accordéon comme un soufflet. Cette cartouche filtrante 92 présente ainsi de préférence une forme générale de révolution autour de cet axe X. En variante, la paroi périphérique 92P peut être dépourvue de cette cloison intérieure et le média filtrant peut être réalisé dans un matériau suffisamment rigide pour permettre un maintien rigide des deux flasques de support 92A, 92B.

De préférence, le flasque supérieur 92B délimite une ouverture d'évacuation de l'air filtré au travers du média filtrant, en communication avec le conduit interne de la cartouche 92. En outre, le corps 80 comprend encore un orifice 90 d'évacuation du flux d'air purifié débouchant à l'intérieur du compartiment principal 82 et par exemple en communication avec le conduit interne de la cartouche 92.

De préférence, la cartouche 92 est destinée à être montée suspendue à l'intérieur de la partie supérieure 80B du boîtier 80. Par exemple, la partie supérieure 80B est munie intérieurement dans le prolongement de son ouverture de refoulement d'un tronçon interne de conduite de fluide à laquelle est suspendue la cartouche 92. Par exemple, le flasque de support supérieur est muni autour de son ouverture de moyens de fixation configurés pour venir coopérer de manière étanche autour de ladite portion de conduite. Les moyens de fixation peuvent comprendre tout type de fixation, tels qu'encliquetage, montage en force, montage à baïonnette, soudure, etc.

Comme cela ressort clairement des figures, le compartiment principal aval de collecte et de filtration 82 et le compartiment amont 84 de captation de particules liquides communiquent l'un avec l'autre respectivement par l'orifice d'admission du dispositif 12 et l'orifice de sortie du dispositif 50. De préférence, comme cela est illustré sur la figure 6, l'orifice d'admission et l'orifice de sortie sont confondus en un orifice commun 83. On voit par exemple, que cet orifice commun 83 débouche latéralement à l'intérieur des deux compartiments 82 et 84.

On va maintenant décrire les principaux aspects d'un dispositif de captation de particules liquides dans un flux gazeux selon les premier et deuxième modes de réalisation en référence aux figures 1 à 7.

Au cours d'une première étape, l'usager du véhicule 10 actionne le frein de son véhicule 10. Lors de cette action de freinage, des particules de poussières de freinage liées à l'abrasion des garnitures de frein sont rejetées. Lors de l'actionnement du frein, le système de freinage 10 pilote simultanément la mise en marche de la turbine d'aspiration située en aval du dispositif dépolluant 12.

Le flux d'air sale pouvant être chargé en particules liquides est alors entraîné par aspiration par le tuyau 28 et pénètre tout d'abord dans le dispositif de captation 50. Il entre alors dans la chambre de décantation 66 à l'intérieur de laquelle il se décharge de ses particules liquides qui viennent décanter par effet de gravité au fond de la chambre 66. Les particules liquides décantées sont alors aspirées par la chambre de collecte 68 par effet de dépression au travers du trou d'aspiration 70 (figure 7).

Le flux d'air sale ainsi déchargé des microgouttelettes poursuit sa trajectoire hors du dispositif de captation 50 et atteint le dispositif dépolluant 12. Il se décharge d'une partie de ses particules de poussières par le ou les organes de séparation qu'il traverse au cours de son trajet à l'intérieur du dispositif 12. Le flux d'air sale ainsi purifié sort par l'orifice de refoulement du dispositif dépolluant 12.

## Revendications

1. Dispositif (50) de captation de particules liquides dans un flux gazeux, comprenant un corps (52) délimitant une cavité (54) définissant une trajectoire principalement verticale d'écoulement du flux d'air gazeux entre des orifices d'entrée (56) et de sortie (58) dans une configuration de fonctionnement du dispositif (50), **caractérisé en ce que** la cavité (54) comprend une cloison intérieure (64) de séparation verticale délimitant une chambre (66) de décantation des particules liquides le long de ladite trajectoire principale et une chambre (68) de collecte de liquide comprenant une zone en dépression, la cloison (64) comprenant un trou (70) ménagé en bas de la cloison (64) agencé pour aspirer du liquide de la chambre (66) de décantation vers la chambre de collecte (68) par effet de dépression dans ladite zone, la cloison (64) comprenant une ouverture (72) de mise en dépression de ladite zone, ménagée en haut de la cloison (64).

2. Dispositif (50) selon la revendication 1, dans lequel la chambre de décantation (66) comprend un relief configuré pour générer une perte de charges selon la trajectoire principale d'écoulement du flux gazeux.

3. Dispositif selon l'une quelconque des revendications 1 ou 2, dans lequel l'ouverture (72) est localisée le long de la trajectoire principale d'écoulement du flux d'air gazeux et est configurée pour introduire un rétrécissement de section de passage du flux d'air gazeux le long de la trajectoire principale ou une modification de direction de la trajectoire principale afin de provoquer une mise en dépression de ladite zone.

4. Dispositif (50) selon l'une quelconque des revendications 1 à 3, dans lequel l'ouverture (72) est ménagée en haut, à distance du trou d'aspiration (70) selon la direction verticale.

5. Dispositif (50) selon l'une quelconque des revendications 1 à 4, dans lequel, l'orifice de sortie (58) débouchant à l'intérieur de la chambre de collecte (66), la trajectoire principale traverse la cloison (64) par l'ouverture ménagée (72) en haut de la cloison (64) avant d'atteindre l'orifice de sortie (58) par la chambre de collecte (66).

6. Dispositif (50) selon l'une quelconque des revendications précédentes, dans lequel l'orifice d'entrée (56) débouche verticalement de façon à permettre la vidange du liquide collecté qui peut s'écouler par effet de gravité par l'orifice d'entrée (56).

7. Dispositif (50) selon l'une quelconque des revendications précédentes, dans lequel la trajectoire principale comprend au moins un changement de direction.

8. Dispositif (50) selon l'une quelconque des revendications précédentes, dans lequel la trajectoire comprend une portion en forme générale de « S » formé par deux coudes successifs d'orientations différentes.

9. Dispositif (50) selon l'une quelconque des revendications précédentes, dans lequel le trou d'aspiration (70) a une forme générale oblongue de direction longitudinale sensiblement horizontale.

10. Dispositif (50) selon l'une quelconque des revendications précédentes, dans lequel la cloison (64) comprend une paroi de forme générale annulaire autour d'un axe principal d'orientation sensiblement verticale ou comprend une paroi de forme générale plane.

11. Dispositif (50) selon l'une quelconque des revendications précédentes, comprenant des embouts (60, 62) de branchement pour son raccordement à un circuit de tuyaux de circulation du flux gazeux.

12. Système (10) de récupération de particules de freinage comprenant un dispositif aval (12) de filtration et de collecte de particules de freinage comprenant un orifice d'admission d'un flux d'air sale et un orifice de refoulement d'un flux d'air purifié, l'orifice de refoulement étant destiné à être raccordé à un organe d'aspiration du flux d'air afin de provoquer, en fonctionnement, par effet d'aspiration une circulation du flux d'air à l'intérieur du dispositif (12) entre les deux orifices, **caractérisé en ce que** l'orifice d'admission est raccordé à l'orifice de sortie d'un dispositif amont (50) de captation de particules liquides selon l'une quelconque des revendications précédentes de telle sorte que le flux d'air sale s'écoule au travers dudit dispositif de captation (50) avant son admission par l'orifice d'admission du dispositif aval de filtration et de collecte (12).

13. Système (10) selon la revendication précédente, dans lequel le dispositif aval (12) de collecte et de filtration et le dispositif amont (50) de captation sont formés d'une seule pièce dans un corps de boîtier commun (80) comprenant respectivement un compartiment principal aval (82) de collecte et de filtration et un compartiment amont de captation (84) de particules liquides communiquant l'un avec l'autre respectivement par leur orifice d'admission et leur orifice de sortie.

## Patentansprüche

1. Vorrichtung (50) zum Auffangen von flüssigen Partikeln in einem Gasstrom, umfassend einen Körper (52), der einen Hohlraum (54) begrenzt, der einen im Wesentlichen vertikal verlaufenden Hauptströmungspfad für den Gasstrom zwischen einer Einlass- (56) und einer Auslassöffnung (58) in einer Betriebsstellung der Vorrichtung (50) definiert, **dadurch gekennzeichnet, dass** der Hohlraum (54) eine innere vertikale Trennwand (64) umfasst, die eine Absetzkammer (66) für die flüssigen Partikel entlang des Hauptströmungspfads und eine Flüssigkeitssammelkammer (68) begrenzt, die einen Unterdruckbereich umfasst, wobei die Trennwand (64) ein Loch (70) umfasst, das unten an der Trennwand (64) angeordnet und dazu eingerichtet ist, Flüssigkeit aus der Absetzkammer (66) in die Sammelkammer (68) durch eine Unterdruckwirkung in dem genannten Bereich anzusaugen, wobei die Trennwand (64) eine Öffnung (72) zur Unterdruckerzeugung in dem genannten Bereich umfasst, die oben an der Trennwand (64) angeordnet ist.

2. Vorrichtung (50) nach Anspruch 1, wobei die Absetzkammer (66) ein Relief aufweist, das dazu ausgelegt ist, einen Druckverlust entlang des Hauptströmungspfads des Gasstroms zu erzeugen.

3. Vorrichtung nach einem der Ansprüche 1 oder 2, wobei die Öffnung (72) entlang des Hauptströmungspfads des Gasstroms angeordnet und dazu ausgelegt ist, eine Verengung des Durchgangsquerschnitts für den Gasstrom entlang des Hauptströmungspfads oder eine Richtungsänderung des Hauptströmungspfads hervorzurufen, um eine Unterdruckerzeugung in dem genannten Bereich zu bewirken.

4. Vorrichtung (50) nach einem der Ansprüche 1 bis 3, wobei die Öffnung (72) oben, in einem Abstand von dem Saugloch (70) entlang der vertikalen Richtung angeordnet ist.

5. Vorrichtung (50) nach einem der Ansprüche 1 bis 4, wobei bei in das Innere der Sammelkammer (66) mündender Auslassöffnung (58) der Hauptströmungspfad die Trennwand (64) durch die oben an der Trennwand (64) angeordnete Öffnung (72) durchquert, bevor er über die Sammelkammer (66) die Auslassöffnung (58) erreicht.

6. Vorrichtung (50) nach einem der vorhergehenden Ansprüche, wobei die Einlassöffnung (56) vertikal mündet, um das Entleeren der gesammelten Flüssigkeit zu ermöglichen, die durch Schwerkraftwirkung durch die Einlassöffnung (56) abfließen kann.

7. Vorrichtung (50) nach einem der vorhergehenden Ansprüche, wobei der Hauptströmungspfad mindestens eine Richtungsänderung umfasst.

8. Vorrichtung (50) nach einem der vorhergehenden Ansprüche, wobei der Strömungspfad einen "S"-förmigen Abschnitt umfasst, der aus zwei aufeinanderfolgenden Krümmungen unterschiedlicher Ausrichtungen gebildet ist.

9. Vorrichtung (50) nach einem der vorhergehenden Ansprüche, wobei das Saugloch (70) eine längliche Form in im Wesentlichen horizontaler Längsrichtung aufweist.

10. Vorrichtung (50) nach einem der vorhergehenden Ansprüche, wobei die Trennwand (64) eine Wand mit ringförmiger Gestalt um eine im Wesentlichen vertikal ausgerichtete Hauptachse oder eine Wand mit flacher Gestalt umfasst.

11. Vorrichtung (50) nach einem der vorhergehenden Ansprüche, umfassend Anschlussstutzen (60, 62) für deren Anschluss an eine Zirkulationsrohrleitung für den Gasstrom.

12. System (10) zur Rückgewinnung von Bremspartikeln, umfassend eine nachgeschaltete Filtrations- und Sammeleinrichtung (12) für Bremspartikel, die eine Einlassöffnung für einen Schmutzluftstrom und eine Auslassöffnung für einen gereinigten Luftstrom umfasst, wobei die Auslassöffnung dazu bestimmt ist, mit einem Ansaugorgan für den Luftstrom verbunden zu werden, um im Betrieb durch Ansaugwirkung eine Zirkulation des Luftstroms im Inneren der Einrichtung (12) zwischen den beiden Öffnungen zu bewirken, **dadurch gekennzeichnet, dass** die Einlassöffnung mit der Auslassöffnung einer vorgeschalteten Auffangvorrichtung (50) für flüssige Partikel nach einem der vorhergehenden Ansprüche so verbunden ist, dass der Schmutzluftstrom durch die genannte Auffangvorrichtung (50) strömt, bevor er durch die Einlassöffnung der nachgeschalteten Filtrations- und Sammeleinrichtung (12) eingelassen wird.

13. System (10) nach dem vorhergehenden Anspruch, wobei die nachgeschaltete Sammel- und Filtrationseinrichtung (12) und die vorgeschaltete Auffangvorrichtung (50) einstückig in einem gemeinsamen Gehäusekörper (80) ausgebildet sind, der jeweils einen nachgeschalteten Hauptraum (82) zum Sammeln und Filtrieren und einen vorgeschalteten Auffangraum (84) für flüssige Partikel umfasst, die jeweils über ihre Einlassöffnung und ihre Auslassöffnung miteinander in Verbindung stehen.

## Claims

1. Device (50) for capturing liquid particles in a gaseous flow, comprising a body (52) delimiting a cavity (54) defining a mainly vertical flow path for the gaseous air flow between inlet (56) and outlet (58) orifices in an operating configuration of the device (50), **characterized in that** the cavity (54) comprises an interior vertical separating partition (64) delimiting a settling chamber (66) for liquid particles along said main path and a liquid collection chamber (68) comprising a low-pressure zone, the partition (64) comprising a hole (70) provided at the bottom of the partition (64) arranged to draw liquid from the settling chamber (66) toward the collection chamber (68) by the depression effect in said zone, the partition (64) comprising an opening (72) for depressurizing said zone, provided at the top of the partition (64).

2. Device (50) according to claim 1, wherein the settling chamber (66) comprises a relief configured to generate a pressure loss along the main flow path of the gaseous air flow.

3. Device according to either of claims 1 or 2, wherein the opening (72) is located along the main flow path of the gaseous air flow and is configured to introduce a narrowing of the cross-section of the gaseous air flow passage along the main path or a change of direction of the main path in order to cause a depressurization of said zone.

4. Device (50) according to any one of claims 1 to 3, wherein the opening (72) is provided at the top, at a distance from the suction hole (70) in the vertical direction.

5. Device (50) according to any one of claims 1 to 4, wherein, the outlet orifice (58) opening into the interior of the collection chamber (66), the main path crosses the partition (64) through the opening (72) provided at the top of the partition (64) before reaching the outlet orifice (58) via the collection chamber (66).

6. Device (50) according to any one of the preceding claims, wherein the inlet orifice (56) opens vertically so as to allow the drainage of the collected liquid, which can flow by gravity through the inlet orifice (56).

7. Device (50) according to any one of the preceding claims, wherein the main path comprises at least one change of direction.

8. Device (50) according to any one of the preceding claims, wherein the path comprises a portion generally shaped as an "S", formed by two successive bends of different orientations.

9. Device (50) according to any one of the preceding claims, wherein the suction hole (70) has a generally oblong shape with a substantially horizontal longitudinal direction.

10. Device (50) according to any one of the preceding claims, wherein the partition (64) comprises a wall of generally annular shape about a main axis of substantially vertical orientation, or comprises a wall of generally planar shape.

11. Device (50) according to any one of the preceding claims, comprising connection fittings (60, 62) for connecting it to a circuit of pipes for circulating the gaseous flow.

12. System (10) for recovering braking particles, comprising a downstream device (12) for filtering and collecting braking particles, comprising an inlet orifice for a dirty air flow and a discharge orifice for a purified air flow, the discharge orifice being intended to be connected to an air flow suction member so as to cause, in operation, by suction effect, a circulation of the air flow inside the device (12) between the two orifices, **characterized in that** the inlet orifice is connected to the outlet orifice of an upstream device (50) for capturing liquid particles according to any one of the preceding claims, such that the dirty air flow flows through said capture device (50) before its admission through the inlet orifice of the downstream filtering and collection device (12).

13. System (10) according to the preceding claim, wherein the downstream collection and filtration device (12) and the upstream capture device (50) are formed as a single piece in a common housing body (80) comprising, respectively, a main downstream compartment (82) for collection and filtration and an upstream compartment (84) for capturing liquid particles, communicating with each other respectively via their inlet orifice and their outlet orifice.
